# EUROPÄISCHE PATENTSCHRIFT

(11) **EP 1 744 425 B1**
(45) Veröffentlichungstag und Bekanntmachung des Hinweises auf die Patenterteilung: **22.05.2019**
(21) Anmeldenummer: 06014181.9
(22) Anmeldetag: 07.07.2006
(51) Int. Cl.: H02G 3/08

(54) **Gehäusewand mit Kabeldurchführung**
Wall of box with cable passage
Paroi d'une boîte avec traversée de câble

(30) Priorität: 11.07.2005 DE 102005032896
(43) Veröffentlichungstag der Anmeldung: 17.01.2007
(73) Patentinhaber: Hager Electro GmbH, 66131 Saarbrücken (DE)
(72) Erfinder: Dissel, Klaus, 66131 Saarbrücken-Ensheim (DE); Isberg, Martin, 66440 Blieskastel (DE); Leyendecker, Alexander, 66386 St. Ingbert (DE); Fischer, Walter, 66386 St. Ingbert (DE)
(74) Vertreter: Nuss, Laurent

(56) Entgegenhaltungen:
- EP-A1- 0 653 825
- DE-A1- 2 557 330
- DE-U1- 9 408 092
- FR-A- 1 307 295
- US-A- 5 353 472

## Beschreibung

Die Erfindung betrifft eine Gehäusewand mit Kabeldurchführung, gemäss Anspruch 1.

Eine solche, in einer Verteilerdose angeordnete Durchführung ist in der DE 9408092 U1 beschrieben. Die Doseninnenwand weist nach innen gerichtete zylinderförmige Auswölbungen auf, die aus einem elastischen Material hergestellt sind und leicht mit einem Messer abgetrennt werden können. Um Öffnungen mit verschiedenen Radien herstellen zu können, sind die Auswölbungen stufenförmig ausgestaltet.

Aus der DE 3915007 C2 ist eine Durchführung bekannt, bei der ein zum Verschluss einer Wandöffnung eines Zähler- oder/und Verteilerschranks vorgesehener Deckel eine Vielzahl kuppelartiger Auswölbungen aufweist. Der Deckel besteht aus einem weichen, zerschneidbaren Material und einem den Deckel stabilisierenden Außenrahmen. Durch Abschneiden der kuppelartigen Auswölbungen können Durchführungsöffnungen gebildet werden.

Aus DE 25 57 330 A1 ist eine Kabeldurchführung für Fernmeldekabel-Endverteiler mit einer Mehrzahl an Kabeldurchführungstüllen, die durch Verbindungsstege als einschlägige Einheit zusammengehalten werden, bekannt.

Aus FR 1 307 295 A ist eine Kabeldurchführung bekannt mit einer ringförmigen Basis zur Befestigung in einer Öffnung und einer innerhalb der Basis angeordneten elastischen Dichtung.

Aus US 5,353,472 ist eine zweiteilige Kabelführung, welche aus zwei separaten Bauteilen besteht, bekannt. Das erste Bauteil ist aus einem weicheren Werkstoff hergestellt und das zweite Bauteil ist aus einem härteren Werkstoff hergestellt.

EP 0 653 825 A1 und DE 94 08 092 U1 offenbaren weitere Kabeldurchführungen.

Der Erfindung liegt die Aufgabe zugrunde, eine stabilere Kabeldurchführung der eingangs erwähnten Art zu schaffen.

Diese Aufgabe wird durch eine Gehäusewand mit Kabeldurchführung nach Anspruch 1 gelöst.

Das härtere Material sorgt für eine stabile Halterung des durch die Gehäusewand tretenden Kabels.

Der Ringbereich wird ggf. durch Stege unterbrochen, wobei der Querschnitt der Stege klein sein kann, so dass sie den Trennvorgang nicht merklich erschweren. Vorteilhaft ermöglichen solche Stege eine einstückige Herstellung von Innenbereichen der Auswölbung mit der Gehäusewand.

Ein zur Abdeckung einer Wandöffnung eines Zahler- oder/und Verteilerschranks vorgesehener Deckel kann mehrere solche, unterschiedlich dimensionierte Durchführungen aufweisen.

In vorteilhafter Ausgestaltung der Erfindung weist die Auswölbung mehrere, zur Bildung von Durchführungsöffnungen unterschiedlicher Weite wahlweise für einen Trennschnitt nutzbare Ringbereiche aus weicherem Material auf.

In der bevorzugten Ausführungsform der Erfindung ist die Auswölbung unter Bildung wenigstens einer ebenen Stufenfläche abgestuft und ggf. jeder Stufe ein für einen Trennschnitt nutzbarer Ringbereich zugeordnet.

Zweckmäßig grenzt der Ringbereich an die Ebene, in welcher die Stufenfläche liegt, an und die Außenfläche des jeweiligen Ringbereichs steht ggf. senkrecht auf der Stufenfläche. Vorteilhaft bildet in diesem Fall die Stufenfläche eine Führung für ein Schneidwerkzeug. Die Schneidkante einer gegen die Stufenflache anliegenden Messerschneide kann dadurch den zur Trennung vorgesehenen Ringbereich mit dem weicheren Material nicht verfehlen.

Durch die Abstufung gebildete, wenigstens eine ebene Stufenfläche ist zweckmäßig zur Senkrechten auf die Gehäusewand geneigt. Bei Anbringung der Durchführung an der Unterseite eines Zähler- oder/und Verteilerschranks erleichtert diese Neigung die Bildung von Durchführungsöffnungen, da sich ein Schneidwerkzeug bequemer ansetzten lässt.

Den Ringbereich kann radial im Abstand ein weiterer, ein weicheres Material aufweisender Ringbereich umgeben. Vorteilhaft verleiht ein solcher weiterer Ringbereich der Durchführung eine gewisse Flexibilität, so dass sich die Durchführungsöffnung z. B. an Kabel anpassen kann, deren Querschnittsfläche nicht exakt kreisrund ist oder geringfügig im Durchmesser variiert.

In weiterer Ausgestaltung der Erfindung sind die den Ringbereich oder/und den weiteren Ringbereich durchquerende Stege aus dem an den betreffenden Ringbereich angrenzenden Material der Gehäusewand gebildet.

In einer bevorzugten Ausführungsform der Erfindung ist die Gehäusewand in dem Ringbereich durch eine aus dem weicheren Material bestehende Innenauskleidung der Auswölbung gebildet, wobei die Innenauskleidung einen Ringschlitz in einem aus dem härteren Material der Gehäusewand gebildeten außenliegenden Teil der Auswölbung ausfüllt. Diese Innenauskleidung kann einstückig hergestellt und im Spritzgießverfahren an die aus härterem Material bestehenden Teile der Kabeldurchführung angeformt sein. Ferner kann die Innenauskleidung in dem weiteren Ringbereich einen Ringschlitz im außenliegenden Teil der Auswölbung ausfüllen. Vorteilhaft verbleibt nach Bildung der Durchführungsöffnung durch die Innenauskleidung eine das durchgeführte Kabel umgreifende, zur Stufenfläche bündige Lippe aus weichem Material, die für eine wirksame Abdichtung sorgt.

Die Erfindung wird nachfolgend anhand eines Ausführungsbeispiels und der beiliegenden, sich auf diese Ausführungsbeispiele beziehenden Zeichnungen naher erläutert. Es zeigen:
- Fig. 1: einen Deckel zum Verschließen einer Öffnung an der Unterseite eines Zählerschranks, welcher Kabeldurchführungen gemäß der Erfindung aufweist, in perspektivischer Ansicht,
- Fig. 2: den Deckel von Fig. 1 in einer gegenüber Fig. 1 um 180° gedrehten Position,
- Fig. 3: den Deckel von Fig. 1 und 2 in einer Schnittansicht montiert an einen Zählerschrank,
- Fig. 4: die Durchführung von Fig. 3 in einer Schnittansicht mit einer gegenüber Fig. 3 gedrehten Schnittebene,
- Fig. 5: die Durchführung von Fig. 1 bis 4, an welcher eine Durchführungsöffnung gebildet ist, und
- Fig. 6: eine Innenauskleidung des Deckels von Fig. 1 und 2.

Ein Deckel 1 mit Befestigungslaschen 2 bis 5 zur Befestigung des Deckels an einem Zählerschrank 6 weist eine Vielzahl von unterschiedlich dimensionierten Durchführungen 7 auf. Der Deckel 1 besteht aus einer Deckelplatte 25 und einem umlaufenden Dichtungsrahmen 24. Der Deckel 1 verschließt eine Öffnung 26 im Zählerschrank 6. Im Bereich der Öffnung 26 bildet die Deckelplatte 25 die Wand des Zählerschranks.

An der Deckelplatte 25 ist ferner ein rahmenartig umlaufender Steg 29 gebildet, welcher der Führung und Zentrierung des Deckels 1 beim Schließen der Öffnung 26 dient. Ein weiterer rahmenartiger Steg 30 bildet einen Anschlag, welcher gemeinsam mit dem Steg 29 die Position der Befestigungslaschen 2 bis 5 innerhalb der Öffnung 26 festlegt.

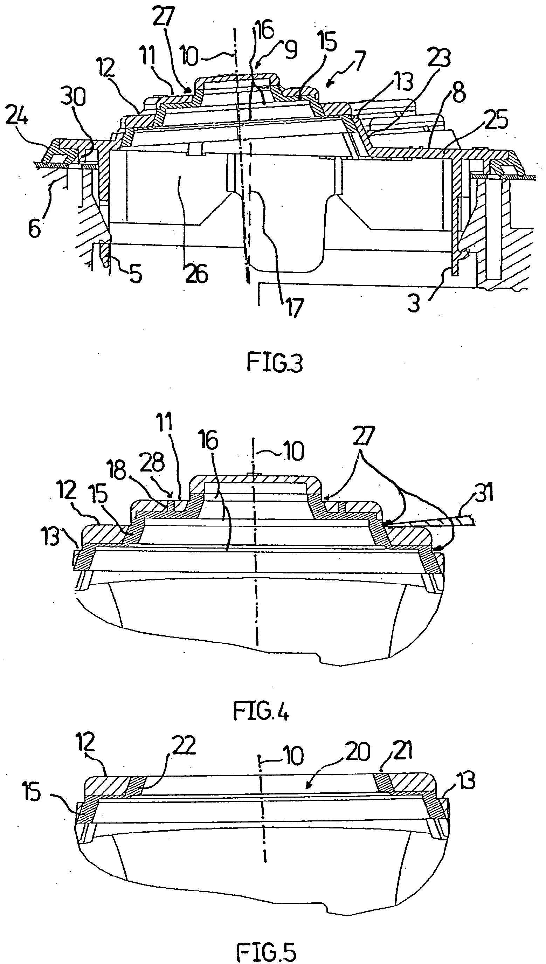

Wie Fig. 3 erkennen lässt, sind die Durchführungen 7 jeweils durch eine aus einer Ebene 8 der Deckelplatte 25 herausragenden Auswölbung 9 gebildet. Die zu einer Achse 10 im wesentlichen rotationssymmetrische Auswölbung 9 ist unter Bildung ringförmiger ebener Stufenflächen 11 bis 13 abgestuft, wobei die Breite der Stufenfläche 13 hier kleiner als die Breite der Stufenflächen 11 und 12 ist.

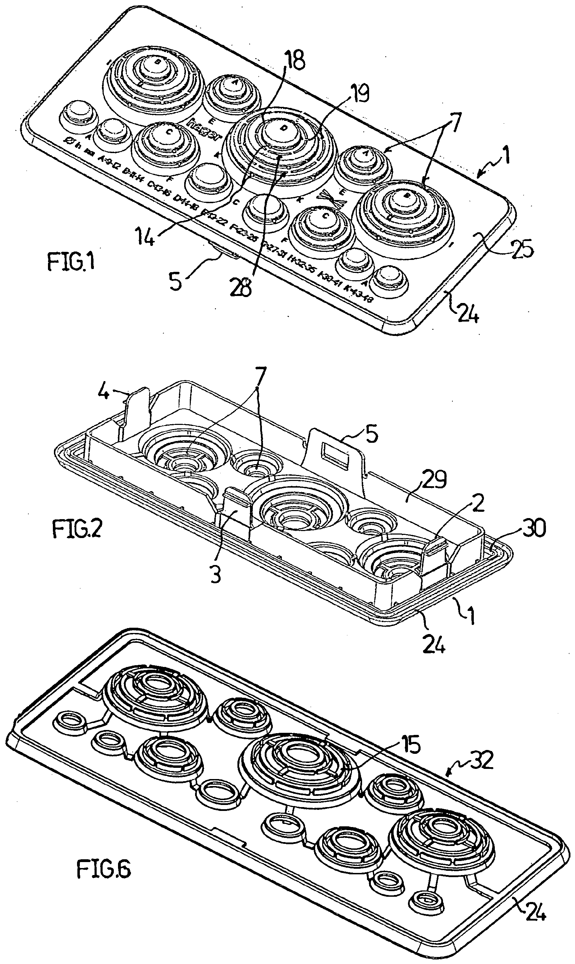

Ein außenliegender Teil 23 der Auswölbung 9 ist einstückig mit der Deckelplatte 25 ausgebildet. Er besteht also aus dem gleichen Material wie die Deckelplatte. Der außenliegende Teil 23 der Auswölbung 9 weist, ausgerichtet zu den Stufenflächen 12 bis 13, jeweils einen Ringschlitz 16 auf, welcher durch radiale, in Fig. 1 sichtbare Stege 14 unterbrochen ist. Die Stege sind erforderlich, um die Auswölbung in ihrer Gesamtheit einstückig mit der Deckelplatte 25 durch Spritzgießen herstellen zu können.

An die Innenseite des außenliegenden Teils 23 der Auswölbung 9 ist eine Auskleidung 15 angeformt, die aus einem weicheren Material als die Deckelplatte 25 besteht. Im Bereich der Schlitze 16 bildet diese Auskleidung von den Stegen 14 abgesehen, allein die Gehäusewand bzw. Wand der Auswölbung 9.

Wie Fig. 3 ferner erkennen lässt, ist die Achse 10 zur Senkrechten 17 auf die Deckelebene 8 geneigt. Entsprechende Neigungen weisen die ebenen Stufenflächen 11 bis 13 auf.

Fig. 3 zeigt einen Schnitt, der durch Stege 19 hindurch verläuft. In einem in Fig. 4 gezeigten, gegenüber dem Schnitt von Fig. 3 verdrehten Schnitt ist ein weiterer, durch Stege 19 unterbrochener Ringschlitz 18 sichtbar, der in dem außenliegenden Teil 23 der Auswölbung 9 im Abstand zum Ringschlitz 16 gebildet und von dem weichen Material der Auskleidung 15 ausgefüllt ist. Wie Fig. 1 erkennen lässt sind zwei Ringbereiche 28 mit Ringschlitzen 18 und Stegen 19 gebildet.

Durch Abtrennung unterschiedlicher Teile der Auswölbung 9 jeweils in einem von drei das weichere Material aufweisenden Ringbereichen 27 lassen sich Durchführungsöffnungen mit drei verschiedenen Durchmessern bilden. Gemäß Fig. 5 wurde der zur Ringfläche 11 ausgerichtete Ringbereich 16 unter Bildung einer Durchführungsöffnung 20 bei 21 durchtrennt. Vorteilhaft bildet ein verbleibender an die Trennschnittfläche 21 grenzender Abschnitt 22 der Auskleidung 15 einen flexiblen, gegen ein durchgeführtes Kabel abdichtend anliegenden Innenring.

Vorteilhaft bildet die Ringfläche 12 beim Abtrennen des betreffenden Teils der Auswölbung 9 eine Führung für ein Schneidwerkzeug 31, welche sicherstellt, dass die Schneide des Werkzeugs auf den weichen, leicht durchtrennbaren Ringbereich 16 auftrifft. Die Neigung der Ringflächen 11 bis 13 zur Senkrechten 17 auf die Ebene 8 erleichtert das Abtrennen im montierten Zustand des Deckels 1 an der Unterseite eines Zählerschranks. Die durch das weiche Material der Auskleidung 15 ausgefüllten Ringschlitze 18 in einem weiteren Ringbereich 28 sorgen für eine gewisse Nachgiebigkeit der ein durchgeführtes Kabel umgebenden Gehäusewand, so dass vorteilhaft eine Anpassung an im Querschnitt nicht exakt kreisrunde Kabel erfolgen kann.

Wie Fig. 6 zeigt, kann die Auskleidung 15 Bestandteil eines einzigen Spritzgussstückes 32 sein, welches Auskleidungen für sämtliche Durchführungen 7 des Deckels 1 sowie den Dichtungsrahmen 24 umfasst.

## Patentansprüche

1. Gehäusewand mit Kabeldurchführung, insbesondere ein Deckel eines Zahler- oder/und Verteilerschranks (6), mit einer Auswölbung (9) in einer Deckelplatte (25), welche unter Bildung einer Durchführungsöffnung (20) durch einen Schnitt quer zur Senkrechten (17) auf die Gehäusewandebene (8) von der Deckelplatte (25) ganz oder teilweise trennbar ist, wobei die Auswölbung (9) ein Material aufweist, das weicher als das Material der Deckelplatte (25) ist, wobei die Auswölbung (9) in einem geschlossenen oder unterbrochenen Ringbereich (27) ausschließlich durch das weichere, für den Trennschnitt vorgesehene Material gebildet ist,
**dadurch gekennzeichnet, dass** an den Ringbereich (27) beidseitig das härtere, die Auswölbung ferner zumindest auf deren Außenseite bildende Material der Deckelplatte (25) angrenzt.

2. Gehäusewand mit Kabeldurchführung nach Anspruch 1,
**dadurch gekennzeichnet,**
**dass** die Auswölbung (9) mehrere, zur Bildung von Durchführungsöffnungen (20) unterschiedlicher Weite wahlweise für einen Trennschnitt nutzbare Ringbereiche (27) mit weicherem Material aufweist.

3. Gehäusewand mit Kabeldurchführung nach Anspruch 1 oder 2,
**dadurch gekennzeichnet,**
**dass** die Auswölbung (9) unter Bildung wenigstens einer ebenen Stufenfläche (11 - 13) abgestuft ist.

4. Gehäusewand mit Kabeldurchführung nach Anspruch 3,
**dadurch gekennzeichnet.**
**dass** der Ringbereich (27) an die ebene Stufenfläche (11 - 13) angrenzt.

5. Gehäusewand mit Kabeldurchführung nach Anspruch 3 oder 4,
**dadurch gekennzeichnet**
**dass** die wenigstens eine ebene Stufenfläche (11 - 13) zur Senkrechten (17) auf die Gehäusewandebene (8) geneigt ist.

6. Gehäusewand mit Kabeldurchführung nach einem der Ansprüche 1 bis 5, **dadurch gekennzeichnet,**
**dass** den Ringbereich (27) radial im Abstand ein weiterer, ein weicheres Material aufweisender Ringbereich (28) umgibt.

7. Gehäusewand mit Kabeldurchführung nach einem der Ansprüche 1 bis 6, **dadurch gekennzeichnet,**
**dass** aus dem an den Ringbereich (27) oder an den weiteren Ringbereich (28) angrenzenden Material den betreffenden Ringbereich (27) durchquerende Stege (14,19) gebildet sind.

8. Gehäusewand mit Kabeldurchführung nach einem der Ansprüche 1 bis 7, **dadurch gekennzeichnet,**
**dass** die Deckelplatte (25) in dem Ringbereich (27) wenigstens teilweise durch eine aus dem weicheren Material bestehende Innenauskleidung (15) der Auswölbung (9) gebildet ist, wobei die Innenauskleidung (15) einen Ringschlitz (16) in einem aus dem härteren Material der Deckelplatte (25) gebildeten außenliegenden Teil (23) der Auswölbung (9) ausfüllt.

9. Gehäusewand mit Kabeldurchführung nach Anspruch 8, **dadurch gekennzeichnet,**
**dass** in dem weiteren Ringbereich (28) ein Ringschlitz (18) in dem außenliegenden Teil (23) der Auswölbung (9) durch die Auskleidung (15) ausgefüllt ist.

10. Gehäusewand mit Kabeldurchführung nach einem der Ansprüche 1 bis 9, **dadurch gekennzeichnet,**
**dass** mehrere, unterschiedlich dimensionierte Durchführungen (7) in einem zum Verschluss einer Öffnung (26) in einer Wand eines Gehäuses vorgesehenen Deckel (1) gebildet sind.

## Claims

1. Housing wall with cable feedthrough, in particular a cover of a meter and/or distribution cabinet (6), with a bulge (9) in a cover panel (25), which by forming a feedthrough opening (20) through a section perpendicular to the vertical (17) on the housing wall plane (8) can be separated fully or partly from the cover panel (25), wherein the bulge (9) comprises a material which is softer than the material of the cover panel (25), wherein the bulge (9) is formed in a closed or interrupted annular area (27) exclusively by the softer material provided for the separating cut, **characterised in that** the harder material of the cover panel (25) also forming the bulge at least on its outer side adjoins the annular area (27) on both sides.

2. Housing wall with cable feedthrough according to claim 1,
**characterised in that**
the bulge (9) has a plurality of annular areas (27) made of softer material for forming feedthrough openings (20) of varying widths which can be used optionally for a separating cut.

3. Housing wall with cable feedthrough according to claim 1 or 2,
**characterised in that**
the bulge (9) is stepped forming at least one flat step surface (11-13).

4. Housing wall with cable feedthrough according to claim 3,
**characterised in that**
the annular area (27) adjoins the flat step surface (11 - 13).

5. Housing wall with cable feedthrough according to claim 3 or 4,
**characterised in that**
the at least one flat step surface (11 - 13) is inclined to the vertical (17) on the housing wall plane (8).

6. Housing wall with cable feedthrough according to any of claims 1 to 5,
**characterised in that**
an additional annular area (28) made from a softer material surrounds the annular area (27) radially at a distance.

7. Housing wall with cable feedthrough according to any of claims 1 to 6,
**characterised in that**
from the material adjoining the annular area (27) or the additional annular area (28) webs (14, 19) traversing the relevant annular area (27, 28) are formed.

8. Housing wall with cable feedthrough according to any of claims 1 to 7,
**characterised in that**
the cover panel (25) in the annular area (27) is formed at least partly by an inner lining (15) of the bulge (9) made from the softer material, wherein the inner lining (15) fills an annular slot (16) in an outer part (23) of the bulge (9) made from the harder material of the cover panel (25).

9. Housing wall with cable feedthrough according to claim 8,
**characterised in that**
in the additional annular area (28) an annular slot (18) in the outer part (23) of the bulge (9) is filled by the lining (15).

10. Housing wall with cable feedthrough according to any of claims 1 to 9,
**characterised in that**
a plurality of differently dimensioned feedthroughs (7) are formed in a cover (1) provided for closing an opening (26) in a wall of a housing.

## Revendications

1. Paroi de boîtier avec traversée de câbles, en particulier couvercle d'une armoire (6) de compteur ou de distribution, avec un bombement (9) dans une plaque de couvercle (25) qui, par une coupe transversale à la perpendiculaire (17) au plan (8) de la paroi de boîtier, peut être séparé totalement ou partiellement de la plaque de couvercle (25) en formant une ouverture de passage (20), le bombement (9) comprenant un matériau qui est moins dur que le matériau de la plaque de couvercle (25),
le bombement (9) étant, dans une région annulaire (27) fermée ou interrompue, formé exclusivement par le matériau moins dur prévu pour la coupe de séparation, **caractérisée en ce que** le matériau plus dur de la plaque de couvercle (25), formant en outre le bombement au moins sur son côté extérieur, est attenant à la région annulaire (27) de part et d'autre.

2. Paroi de boîtier avec traversée de câbles selon la revendication 1, **caractérisée en ce que** le bombement (9) présente plusieurs régions annulaires (27) avec un matériau moins dur, utilisables sélectivement pour une coupe de séparation afin de former des ouvertures de passage (20) de différentes largeurs de passage.

3. Paroi de boîtier avec traversée de câbles selon la revendication 1 ou 2, **caractérisée en ce que** le bombement (9) est échelonné en formant au moins une surface de gradin plane (11-13).

4. Paroi de boîtier avec traversée de câbles selon la revendication 3, **caractérisée en ce que** la région annulaire (27) est attenante à la surface de gradin plane (11-13).

5. Paroi de boîtier avec traversée de câbles selon la revendication 3 ou 4, **caractérisée en ce que** la surface de gradin plane au moins unique (11-13) est inclinée par rapport à la perpendiculaire (17) au plan (8) de la paroi de boîtier.

6. Paroi de boîtier avec traversée de câbles selon l'une des revendications 1 à 5, **caractérisée en ce que** la région annulaire (27) entoure radialement à distance une autre région annulaire (28) présentant un matériau moins dur.

7. Paroi de boîtier avec traversée de câbles selon l'une des revendications 1 à 6, **caractérisée en ce que** des nervures (14, 19) traversant la région annulaire concernée (27) sont formées à partir du matériau attenant à la région annulaire (27) ou à l'autre région annulaire (28).

8. Paroi de boîtier avec traversée de câbles selon l'une des revendications 1 à 7, **caractérisée en ce que** la plaque de couvercle (25) est, dans la région annulaire (27), formée au moins partiellement par un garnissage intérieur (15), constitué du matériau moins dur, du bombement (9), le garnissage intérieur (15) remplissant une fente annulaire (16) dans une partie en position extérieure (23) du bombement (9), formée du matériau plus dur de la plaque de couvercle (25).

9. Paroi de boîtier avec traversée de câbles selon la revendication 8, **caractérisée en ce que**, dans l'autre région annulaire (28), une fente annulaire (18) dans la partie en position extérieure (23) du bombement (9) est remplie par le garnissage (15).

10. Paroi de boîtier avec traversée de câbles selon l'une des revendications 1 à 9, **caractérisée en ce que** plusieurs traversées (7) de dimensions différentes sont formées dans un couvercle (1) prévu afin de fermer une ouverture (26) dans une paroi d'un boîtier.
